# EUROPÄISCHE PATENTANMELDUNG

(11) **EP 2 159 932 A2**
(43) Veröffentlichungstag der Anmeldung: **03.03.2010**
(21) Anmeldenummer: 09163042.6
(22) Anmeldetag: 18.06.2009
(51) Int. Cl.: H04B 7/185

(54) **Verfahren und Einrichtung zur Auswahl von Satellitenkanälen**

(30) Priorität: 25.08.2008 DE 102008039584
(71) Anmelder: Siemens Programm- und Systementwicklung Gmbh & Co. KG, 21079 Hamburg (DE)
(72) Erfinder: Brenner, Jörg, 22303, Hamburg (DE); Beckmann, Steffen, 21614, Buxtehude (DE); Cramer, Carl Mathias, 24558, Henstedt-Ulzburg (DE)
(74) Vertreter: Maier, Daniel Oliver

(57) **Zusammenfassung**

Verfahren zur Auswahl von Satellitenkanälen in einem Übertragungssystem bestehend aus einer Datenquelle (DQ), einer Datensenke (DS), Satellitenmodems (SM1, SM2) und einer Satellitenfunkstrecke (SFS) mit einem allgemeinen Kanal (AK) und mindestens einem dedizierten Kanal (DK), wobei die Datensenke (DS) in Abhängigkeit von den Übertragungseigenschaften des allgemeinen Kanals (AK) die Datenquelle (DQ) veranlasst zur weiteren Datenübertragung einen dedizierten Kanal (DK) aufzubauen.

## Beschreibung

### Technisches Gebiet

Die Erfindung betrifft ein Verfahren und eine Einrichtung zur Auswahl von Satellitenkanälen.

### Stand der Technik

Zur Datenübertragung in weitab von konventioneller Infrastruktur versorgten Gebieten können Satellitenfunkstrecken benutzt werden. Auch für nur kurzfristig benötigte Datenübertragungsleitungen, wie beispielsweise für Rundfunkreportagen, kommen Satellitenfunkstrecken zum Einsatz. In den meisten Fällen werden dabei, ähnlich wie beim GSM-Mobilfunk, den einzelnen Nutzern vom Betreiber des Satelliten sogenannte SIM-Karten zur Verfügung gestellt mittels welchen die Identifikation der Nutzer und die Vergebührung erfolgt.
Mittels eines Satellitenmodems mit entsprechender SIM-Karte und daran angeschlossener Sendevorrichtung kann der Nutzer diverse Dienste der Satellitenfunkstrecke bzw. der dahintergeschalteten Infrastruktur nutzen und somit beispielsweise eine Datenverbindung ins Internet aufnehmen oder mit einem weiteren Nutzer direkt Daten austauschen. Dazu kann vom Benutzer ein sogenannter zugewiesener (dedizierter) Kanal angefordert werden, welcher bestimmte vom Betreiber des Satelliten zugesicherte Eigenschaften (z.B. Bandbreite) aufweist. Ebenso ist die Benutzung eines allgemeinen Kanals (Hintergrund Kanal, engl. Background channel) möglich, welcher allerdings allen Nutzern gleichzeitig zur Verfügung steht und somit einzelnen Nutzern keine bestimmten Übertragungseigenschaften dieses allgemeinen Kanals garantiert werden. In der Praxis ist es jedoch wünschenswert diesen allgemeinen Kanal bevorzugt zu verwenden, da dadurch eine gegenüber der Verwendung eines zugewiesenen Kanals wesentlich preisgünstigere Datenübertragung möglich ist, insbesondere da im Allgemeinen für die Reservierung eines zugewiesenen Kanals zeitabhängige Gebühren anfallen, hingegen für die Verwendung des allgemeinen Kanals eine datenmengenabhängige Verrechnung erfolgt

In der US 5 826 190 A ist ein Verfahren beschrieben, welches die Umschaltung zwischen Satellitenfunkkanälen erlaubt, wenn ein Teilnehmerendgerät auf dem ihm zugewiesenen Kanal Empfangsschwierigkeiten erfährt.
Die US 5 561 838 A offenbart ein ähnliches Verfahren, bei dem auch eine Umschaltung der Datenübertragung auf einen Kanal eines weiteren Satelliten erfolgt und die dazu benötigten Parameter bestimmt und übermittelt werden.

### Darstellung der Erfindung

Der Erfindung liegt daher die Aufgabe zugrunde, ein Verfahren und Einrichtungen zur Auswahl von Satellitenkanälen anzugeben, mittels welcher in Abhängigkeit von den Übertragungseigenschaften des allgemeinen Kanals die Datenübertragung zwischen dem allgemeinen Kanal und einem dedizierten Kanal gewechselt wird.

Die Aufgabe wird durch ein Verfahren mit den Merkmalen des Anspruchs 1 und Einrichtungen gemäß der Ansprüche 5 und 6 gelöst.

Dem Grundgedanken der Erfindung nach wird eine (digitale) Datenübertragungsstrecke bestehend aus einer Datenquelle, einem Satellitenmodem, einer Satellitenfunkstrecke und einem zweiten empfangenden Satellitenmodem sowie einer Datensenke aufgebaut, welche mindestens einen allgemeinen (Datenübertragungs)Kanal den Nutzern zur Verfügung stellt und auf Anforderung der Nutzer jeweils mindestens einen dedizierten (Datenübertragungs)Kanal den Nutzern zur Verfügung stellt, wobei bei der Übertragung von Daten über den allgemeinen Kanal eine kontinuierliche Bestimmung der Übertragungseigenschaften des allgemeinen Kanals erfolgt und falls diese Übertragungseigenschaften einen bestimmten Schwellwert unterschreiten ein Umschaltbefehl an das Satellitenmodem der Datenquelle ausgegeben wird, welcher die Anforderung eines dedizierten Kanals durch das Satellitenmodem der Datenquelle bewirkt.

Damit ist der Vorteil erzielbar, dass der allgemeine Kanal einer Satellitenfunkstrecke zur Datenübertragung verwendet werden kann und nur, wenn die Übertragungseigenschaften des allgemeinen Kanals nicht ausreichen, die Datenübertragung auf einen dedizierten Kanal verlagert wird und wenn die Übertragungseigenschaften des allgemeinen Kanals wieder den erforderlichen Wert annehmen auf den allgemeinen Kanal zurückgewechselt wird.

Der Hauptaspekt der erfindungsgemäß vorgeschlagenen Lösung liegt in der kontinuierlichen Bestimmung der Übertragungseigenschaften des allgemeinen Kanals. Dazu analysiert das Satellitenmodem der Datensenke mittels einer Datenübertragungsqualitätsanalyseeinrichtung kontinuierlich die aus dem Nutzdatenstrom oder anderen Informationsquellen bestimmten Übertragungseigenschaften. Diese Übertragungseigenschaften werden beispielsweise aus der Verlustrate der Datenpakete (engl. packet loss rate) bestimmt, wobei beim Überschreiten einer bestimmten Verlustrate ein Steuerbefehl zum Aufbau eines dedizierten Kanals ausgegeben wird. Weitere Übertragungseigenschaften sind beispielsweise aus dem für Audio- und Videoübertragungen häufig eingesetzten RTP (engl. Realtime Protokoll, standardisiert in IETF, RFC 3550) ableitbar, da Datenpakete gemäß dem RTP eine Zeitkennung (engl. time stamp) und eine Nummerierung (engl. sequence number) aufweisen, aus welchen auf die Übertragungseigenschaften der Satellitenfunkstrecke geschlossen werden kann, da bei sich verschlechternden Übertragungseigenschaften die Fehlreihungen von Datenpaketen zunehmen. Besonders Fehlreihungen, d.h. Datenpakte treffen nicht in der Absendereihenfolge bei der Datensenke ein (was beispielsweise von unteren (hardwarenahen) Protokollebenen durch die wiederholte Sendung verlorengegangener Datenpakete verursacht wird) sind besonders für die Übertragung von kontinuierlichen Datenströmen (z.B. Audio- und Videodatenströmen) störend, da verspätet eintreffende Datenpakte meist nicht mehr in den Ausgangsdatenstrom eingefügt werden können und ohnedies bis zu einem gewissen Maß von der Kodierung des Audio- oder Videodatenstroms ersetzt werden. Die Häufigkeit des Auftretens fehlgereihter Datenpakete ist somit ein bevorzugter Indikator für die Übertragungseigenschaften einer Satellitenfunkstrecke.

Eine weitere Möglichkeit der Bestimmung der Übertragungseigenschaften der Satellitenfunkstrecke besteht in der Analyse des sogenannten Jitter Buffers (Pufferspeicher, bzw. Ausgleichsspeicher) der Datensenke. Zur Ausgabe eines kontinuierlichen Datenstroms umfasst die Datensenke einen Jitter Buffer, aus welchem mit einer festgelegten Rate die einzelnen Datenpakte, oder auch einzelne Nutzdatenworte ausgegeben werden. Der Jitter Buffer erfüllt die Aufgabe, ein Reservoir an Nutzdaten in der richtigen Reihenfolge abzuspeichern um Schwankungen der Geschwindigkeit der Nutzdatenanlieferung (über die Satellitenfunkstrecke) auszugleichen. Werden hohe Schwankungen dieser Geschwindigkeit erwartet (was im Allgemeinen auf fluktuierende Übertragungseigenschaften hinweist, so ist die Kapazität des Jitter Buffers zu vergrößern. Eine Bestimmung des Füllstands des Jitter Buffers der Datensenke ist somit ein bevorzugtes Merkmal der Übertragungseigenschaften.
Eine besondere Ausführungsform eines Jitter Buffers (adaptiver Jitter Buffer) sieht eine variable Kapazität des Speichers vor, wobei aus dem zeitlichen Verlauf (Schwankung) der Rate an Nutzdatenanlieferungen an den Speicher des Jitter Buffers eine Kapazität dieses Speichers bestimmt wird, sodass eine kontinuierliche Datenausgabe aus diesem Speicher mit konstanter Datenrate möglich ist. Diese vom adaptiven Jitter Buffer bestimmte Kapazität eignet sich gut als Merkmal der Übertragungseigenschaften einer Satellitenfunkstrecke.

Erfindungsgemäß ist vorgesehen einen Schaltbefehl von der Datensenke an die Datenquelle auszugeben, welcher die Datenquelle veranlasst einen dedizierten Kanal anzufordern. Die Übertragung dieses Schaltbefehls erfolgt über einen Steuerkanal. Mittels dieses Schaltbefehls werden ebenso der Abbau des dedizierten Kanals und damit die Wiederaufnahme der Datenübertragung über den allgemeinen Kanal veranlasst.

Während der Datenübertragung über einen dedizierten Kanal werden erfindungsgemäß die Übertragungseigenschaften des allgemeinen Kanals bestimmt, wodurch die Datenübertragung auf den allgemeinen Kanal verlegt werden kann, sobald die Übertragungseigenschaften des allgemeinen Kanals dies zulassen. Die Bestimmung der Übertragungseigenschaften des allgemeinen Kanals erfolgt mittels der Übertragung von Überwachungsdaten (schmalbandiges Überwachungssignal) von der Datenquelle über den allgemeinen Kanal zur Datensenke während die Nutzdaten über einen dedizierten Kanal geleitet werden. Aus den von der Datensenke empfangenen Überwachungsdaten oder anderen Informationsquellen bestimmt die Datensenke die Übertragungseigenschaften des allgemeinen Kanals und sendet, sobald die Übertragungseigenschaften einen bestimmten Wert erreichen einen Schaltbefehl über den Steuerkanal an die Datenquelle, welcher die Datenquelle veranlasst den dedizierten Kanal abzubauen und die Datenübertragung über den allgemeinen Kanal fortzusetzen.

Mit dem erfindungsgemäßen Verfahren gelingt es, kontinuierliche Nutzdatenströme (besonders Audio- und Videodatenströme) über Satellitenfunkstrecken zu übertragen und dabei jeweils den Kanal zu wählen, welcher die geforderten Mindestübertragungseigenschaften aufweist, wobei zu den Zeiträumen in welchen der (preisgünstigere) allgemeine Kanal diese Eigenschaften aufweist dieser allgemeine Kanal gewählt wird und in den Zeiträumen in welchen der allgemeine Kanals diese Mindestübertragungseigenschaften nicht ausweist ein dedizierter Kanal verwendet wird.

Das erfindungsgemäße Verfahren eignet sich auch vorteilhaft für die Übertragung bidirektionaler Datenströme, wobei in diesem Fall die beteiligten Verbindungspartner sowohl eine Datenquelle als auch gleichzeitig eine Datensenke darstellen. Dabei können beide Verbindungspartner mit einer Datenübertragungsqualitätsanalyseeinrichtung ausgestattet sein oder nur ein Verbindungspartner mit einer Datenübertragungsqualitätsanalyseeinrichtung ausgestattet sein.

### Kurzbeschreibung der Zeichnungen

Es zeigen beispielhaft:

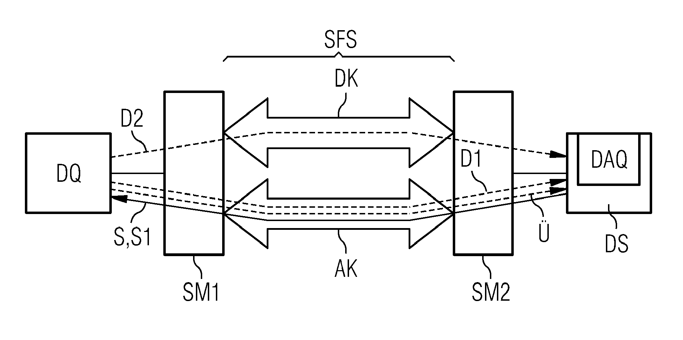

**Fig. 1** ein Satellitenübertragungssystem.

### Ausführung der Erfindung

**Fig.1** zeigt beispielhaft und schematisch den prinzipiellen Aufbau eines Satellitenübertragungssystems. Das Satellitenübertragungssystem umfasst eine Datenquelle DQ welche mit einem ersten Satellitenmodem SM1 verbunden ist, eine Satellitenfunkstrecke SFS und eine Datensenke DS, welche mit einem zweiten Satellitenmodem SM2 verbunden ist. Die Satellitenfunkstrecke SFS umfasst alle zu einer Datenübertragung über Satelliten erforderlichen Baugruppen wie Antennen, Verstärker, Satellit und ähnliches, welche in Fig. 1 nicht dargestellt sind, da diese Baugruppen von dem erfindungsgemäßen Verfahren und den erfindungsgemäßen Einrichtungen nicht berührt sind. Zwischen den Satellitenmodems SM1 und SM2 bestehen ein allgemeiner Kanal AK und ein dedizierter Kanal DK. Dedizierte Kanäle DK werden auf Anforderung der Datenquelle DQ aufgebaut und bieten bestimmte festgelegte Übertragungseigenschaften. Der allgemeine Kanal AK steht allen Benutzern des Satellitenübertragungssystems gleichermaßen zur Verfügung und stellt keine festen Übertragungseigenschaften zur Verfügung, die Übertragungseigenschaften, besonders die Bandbreite sind beispielsweise von der Anzahl der Nutzer, welche gleichzeitig diesen allgemeinen Kanal in Anspruch nehmen, abhängig.
Zu Beginn der Datenübertragung leitet die Datenquelle DQ den Datenstrom D1 über den allgemeinen Kanal AK zu der Datensenke DS. Diese Datensenke DS bestimmt mittels einer in der Datensenke DS enthaltenen Datenübertragungsqualitätsanalyseeinrichtung DAQ aus dem empfangenen Nutzdatenstrom D1 kontinuierlich die Übertragungseigenschaften des allgemeinen Kanals AK. Unterschreiten die solcherart ermittelten Übertragungseigenschaften bestimmte Mindestwerte, so gibt die Datensenke DS einen Steuerbefehl zum Verwenden eines dedizierten Kanals S über den allgemeinen Kanal AK an die Datenquelle DQ aus. Die Datenquelle DQ fordert in Folge des empfangenen Steuerbefehls S einen dedizierten Kanal DK zur Datensenke DS vom Satellitenmodem SM1 an und leitet nach dem Aufbau des dedizierten Kanals DK den Nutzdatenstrom D2 über diesen dedizierten Kanal DK zur Datensenke DS. Erfolgt die Datenübertragung mittels eines Nutzdatenstroms D2 über einen dedizierten Kanal, so erzeugt die Datenquelle DQ einen Überwachungsdatenstrom Ü und leitet diesen über den allgemeinen Kanal AK an die Datensenke DS. Die Datensenke DS empfängt daraufhin sowohl den Nutzdatenstrom D2 über einen dedizierten Kanal als auch den Überwachungsdatenstrom Ü über den allgemeinen Kanal AK und ermittelt die Übertragungseigenschaften des allgemeinen Kanals AK durch die Datenübertragungsqualitätsanalyseeinrichtung DAQ aus dem empfangenen Überwachungsdatenstrom Ü. Überschreiten die solcherart ermittelten Übertragungseigenschaften bestimmte Mindestwerte, so gibt die Datensenke DS einen Steuerbefehl zum Verwenden des allgemeinen Kanals S1 über den allgemeinen Kanal AK an die Datenquelle DQ aus. Die Datenquelle DQ unterbricht daraufhin die Aussendung des Überwachungsdatenstroms Ü und leitet den Nutzdatenstrom D1 in Folge des empfangenen Steuerbefehls S2 über den allgemeinen Kanal AK zur Datensenke DS und fordert das Satellitenmodem SM1 auf, den dedizierten Kanal DK abzubauen. Die weitere Datenübertragung erfolgt nun wieder als Nutzdatenstrom D1 über den allgemeinen Kanal AK bis die Übertragungseigenschaften des allgemeinen Kanals AK wieder bestimmte Mindestwerte unterschreiten und der Nutzdatenstrom auf einen dedizierten Kanal DK verlegt wird.

### Liste der Bezeichnungen

- DQ: Datenquelle
- DS: Datensenke
- SFS: Satellitenfunkstrecke
- SM1: erstes Satellitenmodem
- SM2: zweiter Satellitenmodem
- DK: dedizierter Kanal
- AK: allgemeiner Kanal
- DAQ: Datenübertragungsqualitätsanalyseeinrichtung
- Ü: Überwachungsdatenstrom
- S: Steuerbefehl zum Verwenden eines dedizierten Kanals
- S1: Steuerbefehl zum Verwenden des allgemeinen Kanals
- D1: Nutzdatenstrom über allgemeinen Kanal
- D2: Nutzdatenstrom über dedizierten Kanal

## Patentansprüche

1. Verfahren zur Auswahl von Satellitenkanälen in einem Übertragungssystem bestehend aus einer Datenquelle (DQ), einer Datensenke (DS), Satellitenmodems (SM1, SM2) und einer Satellitenfunkstrecke (SFS) mit einem allgemeinen Kanal (AK) und mindestens einem dedizierten Kanal (DK) **dadurch gekennzeichnet, dass** zu Beginn der Datenübertragung die Übertragung des Nutzdatenstroms über den allgemeinen Kanal (AK) erfolgt und die Datensenke (DS) aus dem empfangenen Nutzdatenstrom mittels einer
Datenübertragungsqualitätsanalyseeinrichtung DAQ kontinuierlich die Übertragungseigenschaften des allgemeinen Kanals (AK) bestimmt und bei Unterschreiten bestimmter Mindestübertragungseigenschaften des allgemeinen Kanals (AK) einen Steuerbefehl (S) an die Datenquelle (DQ) sendet, welcher die Datenquelle (DQ) veranlasst für die weitere Datenübertragung einen dedizierten Kanal (DK) einzusetzen und einen Überwachungsdatenstrom (Ü) über den allgemeinen Kanal (AK) an die Datensenke (DS) zu senden, mittels welcher die Datenübertragungsqualitätsanalyseeinrichtung (DAQ) die Übertragungseigenschaften des allgemeinen Kanals (AK) bestimmt und bei Überschreiten bestimmter Mindestübertragungseigenschaften des allgemeinen Kanals (AK) einen Steuerbefehl (S1) an die Datenquelle (DQ) sendet, welcher die Datenquelle (DQ) veranlasst für die weitere Datenübertragung den allgemeinen Kanal (AK) einzusetzen.

2. Verfahren zur Auswahl von Satellitenkanälen gemäß Anspruch 1, **dadurch gekennzeichnet, dass** die Datenübertragungsqualitätsanalyseeinrichtung DAQ die Übertragungseigenschaften des allgemeinen Kanals (AK) aus der Anzahl der fehlgereihten Datenpakete des empfangenen Datenstroms ermittelt.

3. Verfahren zur Auswahl von Satellitenkanälen gemäß Anspruch 1, **dadurch gekennzeichnet, dass** die Datenübertragungsqualitätsanalyseeinrichtung (DAQ) die Übertragungseigenschaften des allgemeinen Kanals (AK) aus dem Füllstand eines Pufferspeichers der Datensenke ermittelt.

4. Verfahren zur Auswahl von Satellitenkanälen gemäß Anspruch 1, **dadurch gekennzeichnet, dass** die Datenübertragungsqualitätsanalyseeinrichtung (DAQ) die Übertragungseigenschaften aus der vom empfangenden Satellitenmodem (SM2) gemessenen Verlustrate der Datenpakete ermittelt.

5. Datensenke (DS), welche Mittel umfasst, welche
- aus dem empfangenen Datenstrom mittels einer Datenübertragungsqualitätsanalyseeinrichtung (DAQ) die Übertragungseigenschaften des Übertragungskanals ermitteln,
- diese ermittelten Übertragungseigenschaften mit bestimmten Mindestübertragungseigenschaften vergleichen, und
- wenn die ermittelten Übertragungseigenschaften die Mindestübertragungseigenschaften unterschreiten einen Steuerbefehl (S) zur Umschaltung der weiteren Datenübertragung auf einen dedizierten Kanal (DK) einer Satellitenfunkstrecke an eine Datenquelle (DQ) senden,
- während der Datenübertragung über einen dedizierten Kanal (DK) einer Satellitenfunkstrecke die Übertragungseigenschaften des allgemeinen Kanals (AK) einer Satellitenfunkstrecke mittels einer Datenübertragungsqualitätsanalyseeinrichtung (DAQ) aus einem über den allgemeinen Kanal (AK) einer Satellitenfunkstrecke empfangenen Überwachungsdatenstrom (Ü) bestimmen, und
- wenn die ermittelten Übertragungseigenschaften die Mindestübertragungseigenschaften überschreiten einen Steuerbefehl (S1) zur Umschaltung der weiteren Datenübertragung über den allgemeinen Kanal (AK) einer Satellitenfunkstrecke an eine Datenquelle (DQ) senden.

6. Datenquelle (DQ), welche Mittel umfasst, welche während einer Datenübertragung über den allgemeinen Kanal (AK) einer Satellitenfunkstrecke zu einer Datensenke (DS)
- bei Empfang eines Steuerbefehls (S) von der Datensenke (DS) einen dedizierten Kanal (DK) einer Satellitenfunkstrecke zu dieser Datensenke (DS) aufbauen und die weitere Datenübertragung über diesen dedizierten Kanal (DK) vornehmen, und
- während der Datenübertragung über diesen dedizierten Kanal (DK) einen Überwachungsdatenstrom (Ü) über den allgemeinen Kanal (AK) einer Satellitenfunkstrecke an die Datensenke (DS) senden, und
- bei Empfangs eines Steuerbefehls (S1) von der Datensenke (DS) den aufgebauten dedizierten Kanal (DK) zu dieser Datensenke (DS) abbauen und die weitere Datenübertragung über den allgemeinen Kanal (AK) einer Satellitenfunkstrecke vornehmen, und
- den Überwachungsdatenstrom (Ü) über den allgemeinen Kanal (AK) an die Datensenke (DS) unterbrechen.
